# EUROPEAN PATENT APPLICATION

(11) **EP 4 517 584 A1**
(43) Date of publication of application: **05.03.2025**
(21) Application number: 24184808.4
(22) Date of filing: 26.06.2024
(51) Int. Cl.: G06N 3/045, G06N 3/082, G06N 3/09

(54) **LARGE LANGUAGE MODELS FOR LOG FILE ANALYSIS OF INDUSTRIAL MACHINES**

(30) Priority: 30.08.2023 US 202318458289
(71) Applicant: Nano Dimension Technologies, Ltd., Ness Ziona 7403635 (IL)
(72) Inventor: DAVID, Eli, 6958313 4 Schnitzer Shmuel Street, Apt. 17, Tel Aviv (IL); RUBIN, Eri, 9083500 1 Ma'ale Ha'hamisha, Kibbutz Ma'ale Ha'hamisha (IL)
(74) Representative: Pearl Cohen Zedek Latzer Baratz UK LLP

(57) **Abstract**

A multi-sequence transformer predict N tokens, in parallel, for log files in industrial machines. Token patterns derived from N log file token sequences logged by N respective loggers may be input into N respective intra sequence multi-head self-attention layers identifying patterns among tokens within the same log file token sequence generated by the same logger. Token patterns derived from a combination of the N log file token sequences may be input into a same inter sequence multi-head self-attention layer identifying patterns among tokens across multiple different sequences generated by multiple different loggers. N softmax layers may be generated of N distinct probability distributions that each candidate tokens is a next token in each of the N respective log file token sequences. A plurality of N next tokens may be predicted, in parallel, to co-occur in the plurality of N respective sequences of log file tokens.

## Description

### Field of the Invention

Embodiments of the invention are related to the field of troubleshooting industrial machines by analyzing their log files. In particular, embodiments of the invention are related to using machine learning to automate log file analysis of industrial machines.

### Background of the Invention

Industrial machines produce log files, for example, timestamped data records or "tokens" of various states of their various components. Each token may detail information, such as, errors, temperature changes, pressure changes, processor functions, etc. For example, a three-dimensional (3D) printer may have log files indicating color(s) extracted from an ink cartridge, viscosity, temperature and humidity of the ink, electric or dielectric pixel patterns for printing, a signal when printing is performed, etc.

Log files are used to troubleshoot a problem when the industrial machine has an error, malfunctions, underperforms or fails. Since log files are often the only resource to recover and troubleshoot errors after a failure, log files are generally designed to be overinclusive to anticipate and record all states of all components of industrial machines. As such, industrial machines tend to generate log files having massive data sizes (e.g., terabytes of data). These log files are often unordered, unlabeled, and unstructured. In some cases, log files are not timestamped. Further, the mapping between components and log files may be one-to-one, one-to-many, many-to-one or many-to-many, complicating the interrelationship between components and log file tokens. The result are log files of massive size of mostly irrelevant data that can take human operators days of analysis to sort through to determine the cause of a machine error.

To solve this problem, machine learning solutions were developed to automatically analyze log files for root causes of industrial machine errors. Training these machine learning models, however, uses supervised learning that requires log file tokens to be labeled as associated with normal or abnormal functioning components or machines. Most log files, however, are unlabeled and it is cumbersome, if not impossible, to label these massive data sources for supervised training. Accordingly, training relies on the scarce resource of labeled log files which limits training accuracy. Further, the cause of machine errors are often unknown, or emerge from unknown combinations of multi-component states, and so, cannot be labeled.

Accordingly, there is a need in the art for efficient and accurate machine learning models for analyzing unstructured log files to predict root causes of industrial machine errors.

### Summary of the Invention

According to some embodiments of the invention, there is provided a device, system and method for automated prediction of abnormal behavior in industrial machines. A transformer may be trained on log file databases to mimic the normal behavior of log files to predict a next token in a sequence of log file tokens. When the next log file token predicted by the transformer (mimicking normal behavior) differs from an actual log file token output by a component logger of an industrial machine, the actual tokens of the industrial machine may be predicted to have abnormal behavior.

A single-sequence transformer may be trained to predict a next token in a single sequence of log file tokens input from a single logger logging a single component of the industrial machine. To detect abnormal behavior, however, based on combined states of multiple loggers logging multiple parameters or components of industrial machines, embodiments of the invention provide a multi-sequence transformer. The multi-sequence transformer may predict the co-occurrence of multiple next tokens, logged in parallel, in multiple sequences of log file tokens of multiple respective loggers logging multiple parameters or components of industrial machines. The multi-sequence transformer may include (i) intra sequence multi-head self-attention layers, each single layer identifying single-logger patterns (e.g., associated with a single input token sequence logged by a single logger), executed for each of the multiple sequences in parallel; and (ii) an inter sequence multi-head self-attention layer identifying multi-logger patterns (e.g., associated with multiple different input token sequences logged by multiple different loggers). Inter sequence multi-head self-attention layer thus identifies inter-dependent token data from multiple different loggers to train and predict each next token based on combined token sequences from all or multiple other loggers. The multi-sequence transformer thus models normal log file behavior, and so detects abnormal behavior, based on the collective and inter-related behavior at all or multiple logged components together.

According to some embodiments of the invention, there is provided a device, system and method for operating a multi-sequence transformer to predict tokens for log files in industrial machines. A plurality of N sequences of log file tokens may be stored generated by a plurality of N respective loggers. Token patterns (e.g., N groups of T token embeddings) derived from the plurality of N sequences of log file tokens may be input into a plurality of N distinct respective intra sequence multi-head self-attention layers that output a plurality of N distinct respective sets of intra sequence attention vectors. Each set of intra sequence attention vectors may identify patterns (e.g., T attention vectors) associated with relationships among tokens within the same sequence of log file tokens generated by the same logger. Token patterns (e.g., N x T intra sequence attention vectors or their normalization) derived from a combination of the plurality of N respective sequences of log file tokens may be input into a same inter sequence multi-head self-attention layer that outputs a plurality of N interrelated sets of inter sequence attention vectors (e.g., N x T vectors) identifying patterns associated with relationships among tokens across multiple different input sequences generated by multiple different loggers. A plurality of N softmax layers of N distinct probability distributions may be generated, based on machine learning of the intra and inter sequence attention vectors, that each of a plurality of candidate tokens is a next token in each of the plurality of N respective input sequences of log file tokens. A plurality of N next tokens to co-occur (e.g., at a same log time or iteration) in the plurality of N respective sequences of log file tokens may be predicted, in parallel (e.g., based on a single predictive pass of the transformer), based on the plurality of N softmax layers. In some embodiments, a component logged by one of the loggers may be predicted to have abnormal behavior when a next token recorded by the logger differs from a corresponding next token predicted by the transformer. In some embodiments, upon predicting the abnormal behavior, a signal may be triggered to automatically alter operation of the component until the transformer predicts the abnormal behavior is normalized.

### Brief Description of the Figures

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. **1** is a schematic illustration of a single-sequence transformer, in accordance with some embodiments of the invention;
Figs. **2-3** are schematic illustrations of a multi-sequence transformer, in accordance with some embodiments of the invention;
Fig. **4** is a schematic illustration of a system for analyzing log files of industrial machines using large language models, in accordance with some embodiments of the invention; and
Fig. **5** is a flowchart of a method for analyzing log files of industrial machines using large language models, in accordance with some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### Detailed Description of the Invention

Embodiments of the invention provide a large language model, such as a transformer, that inputs a current log file token sequence and predicts one or more next log file token(s). Embodiments of the invention exploit the observation that most standard log files record normal behavior of industrial machines, while errors generally account for only a small proportion of log file tokens. A large language model, trained on unlabeled log file tokens (e.g., not labeled as associated with normal or abnormal component behavior), is therefore adapted to predict the next log file token assumed to exhibit normal behavior. Embodiments of the invention thus predict abnormal behavior of industrial machines by detecting deviation between the predicted log file tokens output by the large language models (assumed to mimic normal behavior) and the actual log file tokens output by industrial machines. These deviating tokens in industrial machine log files may thus be attributed to errors in associated industrial machine components.

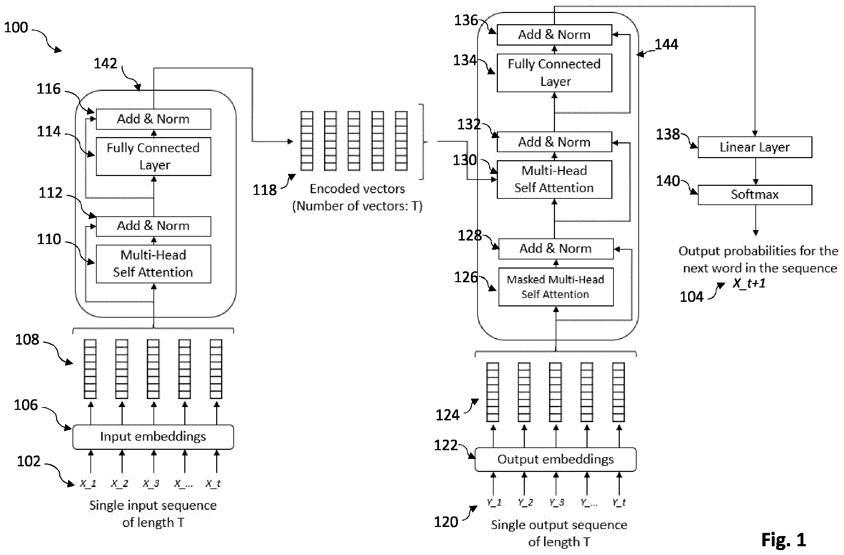

Reference is made to Fig. **1**, which schematically illustrates a single-sequence transformer **100**, in accordance with some embodiments of the invention. Transformer **100** may be a (e.g., fully-connected) deep learning neural network. The left-side of Fig. **1** depicts the transformer's encoder **142** and the right-side of Fig. **1** depicts the transformer's decoder **144.**

Single-sequence transformer **100** may input a single ordered sequence of input tokens **102**, e.g., *{X_1, X_2, X_3,* ... *X_t*} of integer length T tokens (e.g., recorded over T times or intervals), such as, words, subwords, or characters, and outputs a prediction of a next token **104** in the sequence, e.g., *X_t*+*1* (e.g., predicted to be logged at a next T+1 time or interval). Next token **104** may be the most probable next token based on a softmax layer **140** that is a distribution of probabilities of a plurality of M candidate next tokens. For example, an input sequence of words, "the cat ran away from the ...," may generate a softmax layer for predicting the next word, such as, 0.01% table, 0.1% cat, 30% dog, ..., thus resulting in "dog" having a higher probability of being selected for the next word than "table" or "cat". Predicted log file tokens may each have a uniform syntax, for example: Timestamp; Component or logger ID; Content. Actual log file tokens received from loggers may have the same, different, uniform or non-uniform syntax (e.g., some loggers may omit their own ID, but their identity may be predicted by the transformer).

Input embeddings **106** may embed each input token *X_i* into an embedded input vector **108** *V_i* in a high-dimensional vector space. Embedded input vectors **108** *V_X1, V_X2, V_X3,* ... *V_Xt* may represent the interrelationship, such as, the semantic meanings, between each token *X_i* and the other tokens in the input token sequence **102.**

Embedded input vectors **108** *V_X1, V_X2, V_X3,* ... *V_Xt* may be input into a multi-head self-attention layer **110** of encoder **142.** Layer **110** performs self-attention by weighing the importance of different tokens in the input sequence **102** when making predictions for each token *X_i.* Layer **110** performs multi-head self-attention by applying the self-attention mechanism multiple times, in parallel, to concurrently focus attention on (e.g., multiple or all) different tokens in input sequence **102.** For each token *X_i,* multi-head self-attention layer **110** may compute a weighted sum of all other tokens' embedded input vectors **108**, with the weights determined by the other tokens' relevance to the current token *X_i.*

The output sequence of multi-head self-attention layer **110** may be input into fully connected layer **114.** Fully connected layer **114** may comprise a set of fully connected layers independently applied to each position in the sequence.

Encoder **142** may encode the outputs of fully connected layer **114** (e.g., normalized at layer **116**) into T encoded vectors **118** *EV_1, EV_2, EV_3,* ... *EV_t.*

Normalization layer **112** and/or **116** may combine and normalize inputs and/or outputs before and/or after each sub-layer (e.g., **110** and/or **114**) to stabilize and speed up training.

When transformer **100** is iterated to predict two or more next tokens that are interrelated (e.g., sequentially ordered in a sequence), decoder **144** may input embeddings of an output sequence **120** from a previous iteration (e.g., *Y_1, Y_2, Y_3,* ... *Y_t*) to predict the next token **104** in the current iteration. Output sequence **120** may be embedded by output embeddings **122** that embed each output token *Y_i* into a high-dimensional vector space. Embedded output vectors **124** may represent the interrelationship, such as, the semantic meanings, between each output token *Y_i* and the other output tokens in the output token sequence **120.** Transformer **100** may use a masked multi-head self-attention layer **126** to generate an output sequence weighing the importance of different tokens in the output sequence **120** for each token *Y_i.* The mask may be used during training to obfuscate the known actual token (e.g., used for error correction) so the prediction of this token is not known until after its prediction is made.

Decoder **144** may input *t* encoded vectors **118** *EV_1, EV_2, EV_3,* ... *EV_t,* and for example when the current iteration's next token is predicated on a previous iteration's next token, may also input T masked multi-head self-attention layer **126** output sequence, into multi-head self-attention layer **130.** The output of multi-head self-attention layer **130** may be input (e.g., normalized at layer(s) **128** and/or **132**) into fully connected layer **134.**

Decoder **144** may output the results of fully connected layer **134** (e.g., normalized at layer **136**) and modeled into an output by linear layer **138**, which is then passed to a softmax layer **140.** Softmax layer **140** may generate a distribution of probabilities of a plurality of candidate next tokens. Single-sequence transformer **100** may select the most probable candidate as the next token **104**, e.g., *X_t*+*1,* in the token input sequence **102.**

During training mode, transformer **100** may continuously (e.g., periodically) input the input sequence **102** until time T. Transformer **100** may then predict the next token **104** in the sequence at time T+1. The actual logged next token at time T+1 may be received from a logger and errors may be calculated (e.g., as the difference between the predicted and actual logged token at time T+1). Transformer **100** may update (e.g., all or a subset of) the weights of transformer **100**, e.g., using backpropagation, evolutionary modeling, or other error correction mechanisms to minimize errors. These operations may be repeated until the predicted and actual logged tokens match with an above threshold accuracy (e.g., the error or difference between prediction and actual result is smaller than a predefined threshold) and/or the predictive confidence of the softmax layer **240** satisfies a training termination criterion (e.g., the probability distribution, mean, standard deviation, or maximum value reaches a threshold range and/or converges). At this point, transformer **100** is trained, and may be retrained e.g. periodically or each time new data becomes available.

Industrial machines typically generate multiple log file tokens simultaneously or concurrently, e.g., for multiple concurrently operating components and/or multiple properties for a single component. For example, an industrial machine may have tens or hundreds of "logger" components or output ports that write to a log file periodically and/or triggered by an event. The single-sequence transformer **100** of Fig. **1**, however, is adapted to input and output a single ordered sequence of log file tokens, e.g., *X_1, X_2,* ... *X_t*+*1.* Taking a parallelized set of concurrently generated log file tokens and ordering them into a single sequence 102 may impose an artificial and inaccurate sequential relationship and/or timing between parallel generated tokens.

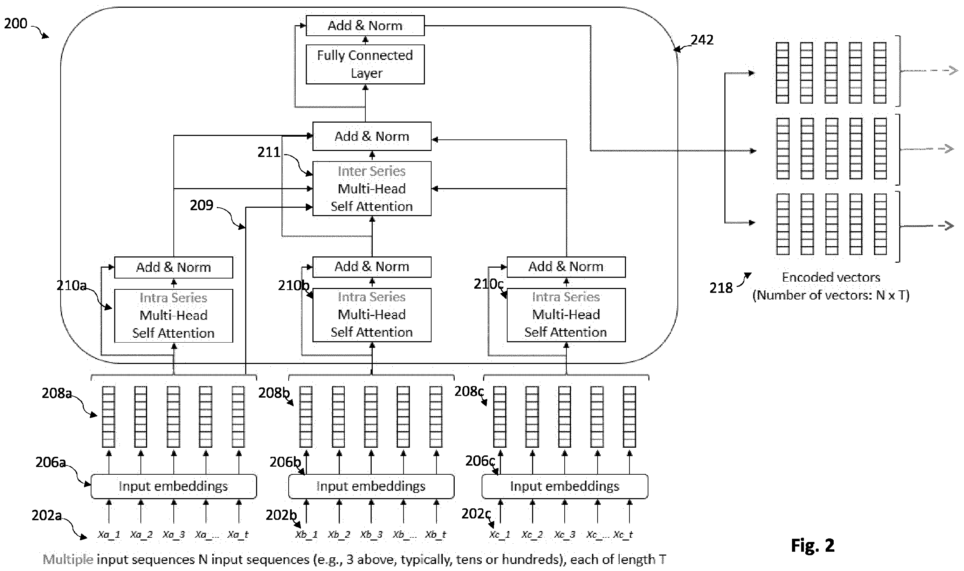

To solve this problem, embodiments of the invention provide a new multi-dimensional or multi-sequence transformer, e.g., as shown in Figs. **2-3**, that inputs and outputs multiple log file tokens, in parallel, thus capturing the accurate parallelized timing and/or relationships between log file tokens.

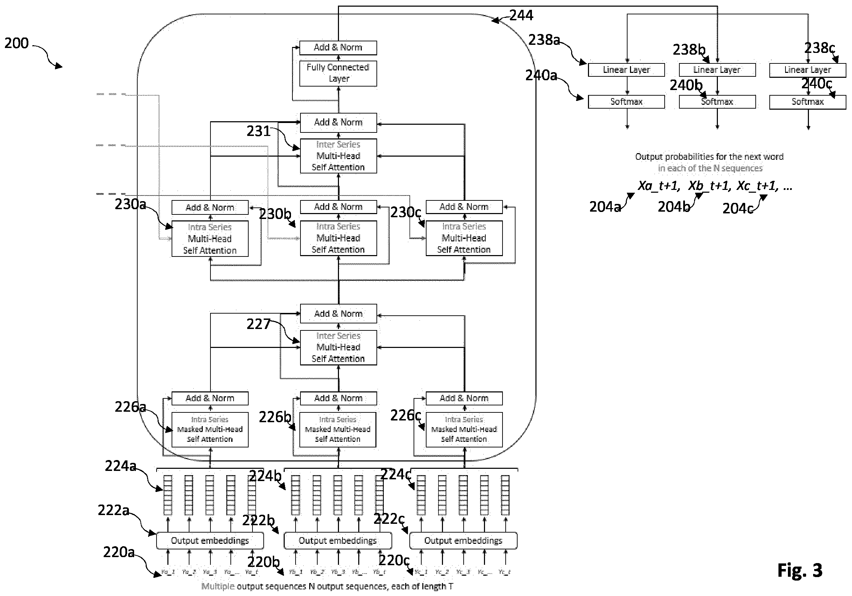

Reference is made to Figs. **2-3**, which are schematic illustrations of a multi-sequence transformer **200**, in accordance with some embodiments of the invention. Transformer **200** is divided into two figures such that the right-most dotted arrows of Fig. **2** connect to the left-most dotted lines of Fig. **3****.**

Multi-dimensional or multi-sequence transformer **200** inputs a plurality of integer N input sequences **202a**, **202b**, **202c**, ... in parallel, for example, each generated by a different one of N loggers of an industrial machine (instead of a single input sequence **102** in Fig. **1**). Each sequence **202a**, **202b**, **202c**, ... may have the same integer length or number of T tokens (e.g., recorded at times t1, t2, ..., T). Components logged synchronously (e.g., periodically) may have non-zero tokens at each time, while components logged asynchronously (e.g., triggered by component-specific events) may have zero or null tokens (e.g., when no data is recorded) or combined tokens (e.g., averaged or self-verifying values or codes when recording at a higher frequency than the rate of the log file sequence).

A plurality of N input embeddings **206a**, **206b**, **206c**, ... may each embed a respective one of the plurality of N input sequences **202a**, **202b**, **202c**, ... into T embedded input vectors **208a**, **208b**, **208c**, ... in a high-dimensional vector space to generate a total of N x T embedded input vectors. Each of the N groups of T embedded input vectors **208a**, **208b**, **208c**, ... may be input into encoder **242.**

Multi-sequence transformer **200** may have an encoder **242** comprising a plurality of integer N "Intra Series" multi-head self-attention layers **210a**, **210b**, **210c**, ... and an "Inter Series" multi-head self-attention layer **211** (instead of a single sequence multi-head self-attention layer **110** in Fig. **1**)**.** Each of the N groups of T embedded input vectors **208a**, **208b**, **208c**, ... may be input into a respective one of the N intra series multi-head self-attention layers **210a**, **210b**, **210c,** .... Each intra series multi-head self-attention layer **210i** performs self-attention on the T embedded vectors **208i** embedding each single input sequence **202i** by weighing the importance of embeddings of different tokens in the same input sequence **202i**, in parallel, for each token in the same sequence. The N intra series multi-head self-attention layers **210a**, **210b**, **210c**, ... thus output N groups of T intra series attention vectors that identify intra-logger embedded patterns within each single input sequence **202i** (between events recorded by the same logger). The N x T intra series attention vectors are then input into the inter series multi-head self-attention layer **211.** Inter series multi-head self-attention layer **211** performs self-attention on the N x T intra series attention vectors by weighing the importance of all other vector indices, ..., in parallel, for each vector index. Since each of the N groups of intra series attention vectors identify embedded patterns within each single input sequence **202i** logged by the same logger, the N x T inter series attention vectors which identify patterns across these N groups (for all vector index combinations) identify embedded patterns associated with multiple different input sequences logged by multiple different loggers. These inter-logger embedded patterns across different logger sequences (between events recorded by different loggers) are often important for detecting normal or abnormal behavior. For example, different components of a system may be interconnected, such that multiple components must be collectively monitored together, and may be collectively responsible for, or supporting evidence of, normal or abnormal component function. In one example, a change in temperature in one component may be normal if it occurs concurrently with a change in pressure in another component, but abnormal if it occurs alone. Inter series multi-head self-attention layer **211** may thus detect inter-component patterns recorded in parallel across multiple different loggers. Accordingly, the inter-logger patterns detected in multi-sequence transformer **200** of Figs. **2-3** (detecting inter multi-component patterns recorded concurrently by different loggers) could not be detected by using multiple single-sequence transformers **100** of Fig. **1** (each only detecting single intra-component patterns recorded by the same single logger).

Encoder **242** may input the N x T inter series attention vectors into a fully connected layer and/or normalization layer(s). Encoder **242** in Fig. **2** may then output N x T encoded vectors **218** (e.g., the number N of input sequences x the length T of each sequence) (e.g., whereas encoder **142** of Fig. **1** encodes a single vector of length T).

In Fig. **3**, when transformer **200** is iterated (e.g., to predict next tokens for multiple future iterations or times T+1, T+2, ...), decoder **244** may input embeddings of each of a plurality of integer N output sequences **220a**, **220b**, **220c**, ... from a previous iteration to predict a plurality of integer N next tokens **204a**, **204b**, **204c**, ... in the current iteration. The N output sequences **220a**, **220b**, **220c** may each be embedded by a respective one of the plurality of N output embeddings **222a**, **222b**, **222c**, ... into T embedded output vectors **224a**, **224b**, **224c**, ... in a high-dimensional vector space, to generate a total of N x T embedded output vectors. Each of the N groups of T embedded output vectors **224a**, **224b**, **224c**, ... may be input into a respective one of the N intra series masked multi-head self-attention layers **226a**, **226b**, **226c**, ... to generate a respective one of a plurality of integer N intra series output attention vectors. Each of the N groups of T intra series output attention vectors may identify intra-logger embedded patterns within each single output sequence **220i** (between events recorded by the same logger). The N x T intra series output attention vectors are then input into the inter series multi-head self-attention layer **227.** Inter series multi-head self-attention layer **227** performs self-attention on all index combinations of the N x T intra series output attention vectors, in parallel, to identify patterns associated across multiple different output sequences logged by multiple different loggers.

Decoder **244** in Fig. **3** may also comprise a plurality of integer N intra series masked multi-head self-attention layers **230a**, **230b**, **230c**, ... and an inter series multi-head self-attention layer **231.** Decoder **244** may input N x T encoded vectors **218** from Fig. **2**, and for example when the current iteration's next token is predicated on a previous iteration's next token, may also input N x T masked multi-head self-attention layer **226a**, **226b**, **226c**, ... output sequence from Fig. **3****.**

The N intra series masked multi-head self-attention layers **230a**, **230b**, **230c**, ... may perform self-attention analysis on the N groups of T vectors independently and the inter series multi-head self-attention layer **231** may perform self-attention analysis across all N x T vectors interdependently. The output of multi-head self-attention layer **231** may be input into a fully connected layer and/or normalized layer(s).

Decoder **244** may then output N groups of T vectors to be sorted into and modeled by a plurality of integer N respective linear layers **238a**, **238b**, **238c**, ... into a plurality of integer N results respectively associated with the plurality of N input sequences **202a**, **202b**, **202c**, .... Each of the N respective linear layers **238a**, **238b**, **238c**, ... is then passed to a respective one of a plurality of N softmax layers **240a**, **240b**, **240c**, .... The plurality of N separate softmax layers **240a**, **240b**, **240c**, ... may generate N separate respective distributions of probabilities of candidates for the N next tokens **204a**, **204b**, **204c**, ..., e.g., *Xa_t*+*1, Xb_t*+1*, Xc_t*+*1,* ... in the respective plurality of N input sequences **202a**, **202b**, **202c**, .... Each ith probability distribution may define the probability that each of M next token candidates is the predicted next token **204i**.

Multi-sequence transformer **200** thus predicts a plurality of N next tokens **204a**, **204b**, **204c**, ... in parallel, based on the multi-logger patterns embedded in multiple different input sequences **202a**, **202b**, **202c**, ..., recorded by multiple different loggers, for example, detected by inter series multi-head self-attention layer(s) **211**, **227** and/or **231**. In some embodiments, because performance and function of multiple components and/or loggers is often interrelated, the multi-sequence transformer **200** ability to predict normal or abnormal behavior based on interrelationships among multiple loggers and/or components may improve log file training accuracy for abnormal behavior prediction, for example, as compared to the single-sequence transformer **100** that can only predict behavior based on a single logger or component at a time.

During training mode, multi-sequence transformer **200** continuously inputs the N input sequences **202a**, **202b**, **202c**, ... until time T. Transformer **200** may then predict the next token **204a**, **204b**, **204c**, ..., at time T+1 for each of the N sequences (e.g., the next reading for temperature, pressure, humidity, etc.). The predicted N next tokens at time T+1 are then pairwise compared to the actual logged N next tokens at time T+1. Errors may be calculated, e.g., measuring the pairwise differences between each ith predicted and actual logged tokens. Transformer **200** may update (e.g., all or a subset of) the weights of transformer **200**, e.g., using backpropagation, evolutionary modeling, or other error correction mechanisms to minimize errors. These operations may be repeated until the predicted and actual logged tokens match with an above threshold accuracy (e.g., the error or difference between prediction and actual result is smaller than a predefined threshold) and/or the predictive confidence of softmax layers **240a**, **240b**, **240c**, ..., satisfies a training termination criterion (e.g., the probability distribution, mean, standard deviation, or maximum value reaches a threshold range and/or converges). At this point, transformer **200** is trained, and may be retrained e.g. periodically or each time new data becomes available.

Components not specifically described in reference to Figs. **2-3** may operate similarly to those described in Fig. **1**, e.g., modified based on the parallelized multi-sequence architecture.

During training of single-sequence transformer **100** of Fig. **1** or multi-sequence transformer **200** of Figs. **2-3**, the probabilities of softmax layer(s) may be used as a measure of error to calibrate error correction. For example, if the probabilit(ies) of the next token(s) are relatively low (e.g., less than 0.5 or 50% change of being correct), relatively high error correction is needed. For example, the lower the probability (greater the error), the higher the degree of correction the transformer training applies (e.g., greater the weight correction and/or number of training iterations). In some embodiments, training continues until one or more metric(s) of softmax layer(s) probabilit(ies) (e.g., distribution, mean, standard deviation, maximum value) reach one or more threshold range(s) and/or converge to satisfy one or more training termination criteria.

During training of single-sequence transformer **100** of Fig. **1** or multi-sequence transformer **200** of Figs. **2-3**, the transformer may each be trained in two stages in the following order: (i) using unlabeled training data comprising log files received from loggers, components and/or industrial machines different than those analyzed in prediction mode and (ii) based (only) on labeled training data comprising log files received from one or more of the loggers, components and/or industrial machines analyzed in prediction mode.

During prediction of single-sequence transformer **100** of Fig. **1** or multi-sequence transformer **200** of Figs. **2-3**, the transformer is expected to accurately predict next token(s) associated with normal machine behavior. Thus, when the transformer predicts one or more next token(s) that are different than the actual measured next token(s) recorded by the machine's logger(s), the differing recorded token(s) are predicted to indicate malfunction. Difference(s) may indicate malfunction(s) when the token(s) measure(s) of deviation exceed predetermined threshold range(s), are the same or different as previous next token(s) predicted for greater than or less than a predetermined number of iterations, and/or when the softmax layer(s) probability(ies) of the differing predicted next token(s) are within threshold probability range(s).

During prediction of single-sequence transformer **100** of Fig. **1** and multi-sequence transformer **200** of Figs. **2-3**, the probability(ies) of next token(s) in softmax layer(s) are expected to be more relatively high (e.g., 0.8 - 1.0), so a relatively low probability of one or more next token(s) (e.g., < 0.7) is an indication of a likely anomaly or abnormal behavior. The transformer may thus be used to predict failures before they occur, are logged and/or are detected in a machine, enabling predictive maintenance to preemptively prevent a failure. In some embodiments, the transformer may be coupled to device controls to automatically adjust, start or stop components if future failure or error is predicted at the transformer. In one example, when the transformer detects overheating, a signal may be automatically sent to a printing head component to stop printing and/or restart printing when the transformer detects the temperature has normalized. Softmax layer(s) may provide a plurality of integer M different probabilities for a plurality of integer M different respective candidate next token(s). Thus, when one or more components malfunction, many or all of the next words associated with or logged for the malfunctioning component(s) may have relatively low probabilities. Softmax layer(s) may thus detect components with errors attributed to a cluster or collective distribution of next words with low probabilities.

Single-sequence transformer **100** of Fig. **1** and multi-sequence transformer **200** of Figs. **2-3** are illustrated with example layer configurations that may be reordered, duplicated, substituted and/or deleted. In one example, in Figs. **2-3**, the order of intra and inter series components may be switched, so that for example, embedded input vectors **208a**, **208b**, **208c**, ... are input into an inter series multi-head self-attention layer before they are input into N intra series multi-head self-attention layers. Additionally or alternatively, either encoder or decoder may be deleted or one or both of encoder and decoder may be replicated to add as many iterations of encoding and/or decoding as desired. Additionally or alternatively, the number of N intra series multi-head self-attention layers executed in parallel may be increased to input one or more input embedding vectors into multiple intra series multi-head self-attention layers. Additionally or alternatively, multiple inter series multi-head self-attention layers may be executed in parallel. Additionally or alternatively, skip connections may be added throughout the transformers **100** and **200** to add extra input to one or more layers. For example, skip connection **209** in Fig. **2** input raw embedded input vector **208a** into inter series multi-head self-attention layer **211** (e.g., in addition to intra series attention vectors). Any other skip connections may be used.

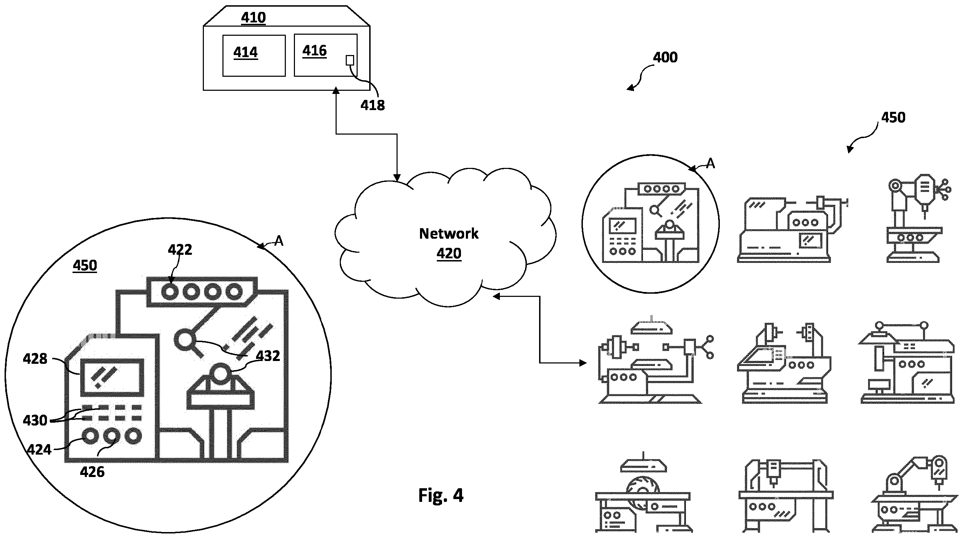

Reference is made to Fig. **4**, which schematically illustrates a system **400** for analyzing log files of industrial machine(s) **450** using large language model(s), in accordance with some embodiments of the invention. System **400** may store and/or generate transformers **100** and/or **200**, store and/or generate industrial machine log files, train and/or predict log file tokens using transformers **100** and/or **200**, and/or predict and/or prevent industrial machine **450** failure or malfunction, as described in reference to Figs. **1-3** and **5.**

System **400** may include one or more device(s) **450**, such as industrial machines or any other device that generates log files, and one or more remote server(s) **410** accessible to device(s) **450** via a network and/or computing cloud **420.** Typically, the transformer is trained by remote server **410** and run for prediction remotely at remote server **410**, or locally at one or more devices **450**, although either remote server **410** and/or local devices **450** may train and/or predict the transformer according to embodiments of the invention. In particular, sparsifying the transformers significantly reduces the computational effort for prediction and training, as compared to conventional fully-activated neural networks, to allow local devices **450**, which may have limited memory and processing capabilities, to quickly and efficiently perform such prediction and/or training. When local devices **450** perform training and runtime prediction, remote server **410** may be removed. Removing remote training and/or prediction may allow local devices **450** to operate the transformer even if they are disconnected from the cloud, if the input rate is so high that it is not feasible to continuously communicate with the cloud, or if very fast prediction is required where even the dedicated hardware is not fast enough today (e.g., deep learning for high frequency trading).

Remote server **410** has a memory **416** and processor **414** for storing and retrieving a transformer and log file(s). Remote server **410** may store a complete transformer (e.g., **100** of Fig. **1** or 200 of Figs. **2-3**) and remote processor **414** may activate the transformer for training and/or prediction. In some embodiments, remote server **410** may have specialized hardware including a large memory **416** for storing a transformer / log file(s) and a specialized processor **414** (e.g., a GPU). Memory **416** may store data **418** including a training dataset of log file(s) and data representing a plurality of weights of synapses or filters of the transformer. Data **418** may also include code (e.g., software code) or logic, e.g., to enable storage and retrieval of data **418** according to embodiments of the invention.

An exploded view "A" of a representative industrial machine **450** is shown in Fig. **4****.** All other industrial machines **450** may have any combination of the same or different components described in reference to A. Industrial machine(s) **450** may include a plurality of loggers **430** that may be hardware or software programs that generate log files of recorded or measured parameters of one or more hardware or software components **432.** The correspondence between loggers **430** and the hardware component **432** for which the logger records data may be one-to-one, one-to-many, many-to-one or many-to-many. For example, two loggers may record the temperature and pressure, respectively, of the same 3D printer.

Remote server **410** and/or industrial machine(s) **450** may each include one or more memories **416** and/or **426** for storing a transformer (e.g., **100** of Fig. **1** or 200 of Figs. **2-3**) provided in some embodiments of the invention. Memories **416** and/or **426** may store each of a plurality of weights of synapses or filters of the transformers and one or more associated input sequences, output sequences, input embeddings, output embeddings, input embedded vectors, output embedded vectors, intra series attention vectors, inter series attention vectors, encoded vectors, softmax probabilities, etc. Remote server **410** and/or industrial machine(s) **450** may each include one or more processor(s) **414** and/or **424** for executing the transformer for training and/or prediction, to predict abnormal behavior of industrial machine(s) **450** by detecting deviation between the predicted log file tokens output by the transformer (assumed to mimic normal behavior) and the actual log file tokens output by loggers **430.** During prediction, the transformer is run forward once. During training, the transformer is run twice, once forward to generate an output and once backwards for error correction (e.g., backpropagation).

Remote processor **414** and/or local processor **424** may store a plurality of N input sequences of *t* log file tokens, each ith sequence of tokens generated by a different ith one of a plurality of respective logger **430**, for example, recording one or more industrial machine components **432.** Remote processor **414** and/or local processor **424** may input t embeddings of each of N input sequences of log file tokens into N respective intra sequence multi-head self-attention layers and output N respective intra sequence attention vectors identifying t patterns between tokens within the same input sequence and logged by the same logger **430.** Remote processor **414** and/or local processor **424** may input the N intra sequence attention vectors into an inter sequence multi-head self-attention layer and output N x *t* inter sequence attention vectors identifying N x *t* patterns associated with tokens from multiple different input sequences and logged by multiple different loggers **430.** Remote processor **414** and/or local processor **424** may generate, based on machine learning of the N x *t* inter sequence attention vectors, a plurality of N softmax layers of N distinct distributions of probabilities that each of a plurality of candidate tokens is selected for N next tokens in the plurality of N respective input sequences of log file tokens.

Network **420**, which connects industrial machine(s) **450** and remote server **410**, may be any public or private network such as the Internet. Access to network **420** may be through wire line, terrestrial wireless, satellite or other systems well known in the art.

Industrial machine(s) **450** and remote server **410** may include one or more controller(s) or processor(s) **414** and **424**, respectively, for executing operations according to embodiments of the invention and one or more memory unit(s) **416** and **426**, respectively, for storing data **418** and/or instructions (e.g., software for applying methods according to embodiments of the invention) executable by the processor(s). Processor(s) **414** and **424** may include, for example, a central processing unit (CPU), a graphical processing unit (GPU, a field-programmable gate array (FPGA), an application-specific integrated circuit (ASIC), a digital signal processor (DSP), a microprocessor, a controller, a chip, a microchip, an integrated circuit (IC), or any other suitable multi-purpose or specific processor or controller. Memory unit(s) **416** and **426** may include, for example, a random access memory (RAM), a dynamic RAM (DRAM), a flash memory, a volatile memory, a non-volatile memory, a cache memory, a buffer, a short term memory unit, a long term memory unit, or other suitable memory units or storage units.

Other devices and configurations may be used, for example, data **418** may be stored locally in memory **426** and no separate server **410** may be used.

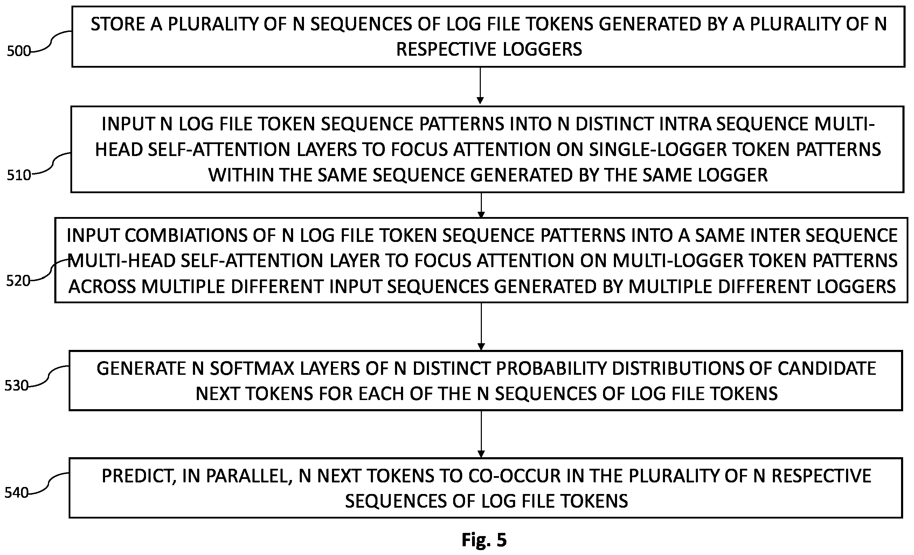

Reference is made to Fig. **5**, which is a flowchart of a method for analyzing log files of industrial machines using a multi-sequence transformer (e.g., **200** of Figs. **2-3**), in accordance with some embodiments of the invention. The operations of Fig. **5** may be executed by a processor (e.g., one or more processor(s) **414** and/or **424** of Fig. **4**) using data stored in a memory (e.g., one or more memory unit(s) **416** and/or **426** of Fig. **4**).

In operation **500**, a memory may store a plurality of N sequences of log file tokens generated by a plurality of N respective loggers

In operation **510**, a processor may input token patterns (e.g., N groups of T token embeddings **208a**, **208b**, **208c**, ... of Fig. **2**) derived from the plurality of N sequences of log file tokens (e.g., **202a**, **202b**, **202c**, ... of Fig. **2**) into a plurality of N distinct respective intra sequence multi-head self-attention layers (e.g., **210a**, **210b**, **210c**, ... of Fig. **2**) to output a plurality of N distinct respective sets of intra sequence attention vectors. Each set of the N of intra sequence attention vectors may identify single-logger patterns (e.g., T attention vectors) associated with relationships among tokens within the same sequence of log file tokens generated by the same logger (e.g., and not with others of the N-1 sequences generated by others of the N-1 loggers). For example, an ith set of T intra sequence attention vectors may only focus attention on intra sequence patterns within the ith log file token sequence.

In operation **520**, a processor may input token patterns (e.g., normalization of the N sets of intra sequence attention vectors) derived from a combination of the plurality of N respective sequences of log file tokens into a same inter sequence multi-head self-attention layer (e.g., **211** of Fig. **2**) to output a plurality of N interrelated sets of inter sequence attention vectors (e.g., N x T vectors) identifying patterns associated with relationships among tokens across multiple different ones of the plurality of N sequences generated by multiple different loggers. For example, each inter sequence attention vector may be based on patterns derived from among all or many other tokens in the N input sequences.

In some embodiments, each of the plurality of N sequences of log file tokens has T tokens and the N intra sequence multi-head self-attention layers generate N x T attention vectors and the inter sequence multi-head self-attention layer generates N x T attention vectors.

In operation **530**, a processor may generate, based on machine learning of the intra and inter sequence attention vectors, a plurality of N softmax layers (e.g., **240a**, **240b**, **240c**, ... of Fig. 3) of N distinct probability distributions that each of a plurality of candidate tokens is a next token in each of the plurality of N respective input sequences of log file tokens.

In operation **540**, a processor may predict based on the plurality of N softmax layers, in parallel, a plurality of N next tokens (e.g., **204a**, **204b**, **204c**, ... of Fig. **3**) to co-occur in the plurality of N respective sequences of log file tokens.

During training mode, the multi-sequence transformer may be trained by inputting the plurality of N sequences of log file tokens until a time T, predicting the plurality of N next tokens at a time T+1, and updating weights in the multi-sequence transformer based on errors between the predicting plurality of N next tokens at the time T+1 and a plurality of N next tokens generated by the plurality of N respective loggers at the time T+1. In some embodiments, the multi-sequence transformer may be trained by a degree of error correction in proportion to a measure of the N probability distributions of the plurality of N softmax layers (e.g., probability distribution, mean, standard deviation, maximum value).

During prediction or inference mode, the transformer is trained to predict normal log file behavior with relatively high accuracy, so when the transformer predicts log file tokens that deviate significantly from the measured log file tokens output by industrial machines, and/or predict log file tokens with significantly low softmax layer probability, embodiments of the invention predict abnormal behavior of the industrial machines. In some embodiment, a next token recorded by one of the plurality of N loggers may be received and abnormal behavior may be predicted in a component logged by the one logger when the received next token differs from one of the predicted plurality of N next tokens in the one of the plurality of N sequences generated by the one logger. Upon predicting the abnormal behavior, may cause some embodiments to trigger a signal (e.g., to an industrial machine) to automatically alter operation of the component, e.g., until the abnormal behavior is predicted to normalize.

In some embodiments, a component for which next tokens are consistently predicted in error or with low probability may indicate component failure. In some embodiment, abnormal behavior may thus be predicted for a component logged by one of the plurality of N loggers when a cluster of (e.g., a majority of) the candidate tokens in the softmax layer have below threshold probabilities of being the next token in the one of the plurality of N sequences generated by the one logger.

Other operations or orders of operations may be used. In the example shown in Fig. 5, multi-sequence transformer executes the N intra sequence multi-head self-attention layers in operation **510**, in sequence, before the inter sequence multi-head self-attention layer in operation **520.** In other embodiments, inter sequence multi-head self-attention layer may be executed before the N intra sequence multi-head self-attention layers. Each set of intra and inter multi-head self-attention layers (in either sequential order) may also be executed as many iterations as desired. Multiple parallelized groups of greater than N (e.g., a multiple of N) intra sequence multi-head self-attention layers may be executed in parallel. Any number of inter sequence multi-head self-attention layers may be executed in parallel. Any number of skip connections (e.g., **209** of Fig. **2**) may also be used to skip layers.

In some embodiments, it may be desired for the transformer to predict log file tokens in real-time, for example, to allow component behavior logged by the loggers to be detected, adjusted and/or corrected in real-time. Real-time prediction by transformers, however, may be difficult due to their typically high computational complexity, particularly when executed locally on industrial machines not equipped with specialized hardware. For example, a fully-connected multi-sequence transformer may exponentially increase both processing and memory usage based on the number N of input token sequences, as compared to a single-sequence transformer.

To increase computational processor speed and reduce memory usage, some embodiments of the invention may sparsify the multi-sequence transformer (or single-sequence transformer) for training and/or prediction by pruning or eliminating synapses or filters in the transformer. Such improvements may allow the transformer to be executed directly on the local industrial machine (e.g., **450** 0f Fig. **4**), which may have limited memory and processing capabilities (e.g., not specialized hardware, such as, GPUs).

Transformers **100** and **200** may each be a deep learning neural network. Each box in Figs. **1-3** may represent one or more neural network layers of the transformer. The transformer and each layer may comprise a plurality of weights, each weight representing a unique connection between a pair of a plurality of artificial neurons in different layers of a plurality of neuron layers. In some embodiments, e.g., where images are processed, the transformer may include one or more convolutional layer(s). Convolutional layer(s) may comprise a plurality of neuron channels in one or more neuron layers, each neuron channel comprising a plurality of artificial neurons, the convolutional layer(s) represented by a plurality of convolutional filters, each convolutional filter comprising a plurality of weights representing a unique connection between the neurons of an input channel of an input layer and the neurons of a convolutional channel of a convolutional layer. Some embodiments of the invention may sparsify the transformer by pruning the transformer (e.g., eliminating or deactivating synapse or convolutional filter connections) or evolving a neural network (e.g., using evolutionary computation such as genetic algorithms or genetic programming, or using reinforcement learning) to generate a sparse transformer neural network during the training phase. A sparse transformer neural network may have a minority (e.g., < 50%, and preferably < 10% or < 1%) of pairs of neurons or channels in adjacent neuron layers connected by weights or convolutional filters. Some embodiments of the invention may sparsify the transformer(s) disclosed herein according to any of the embodiments disclosed in U.S. Patent No. 10,366,322 issued on July 30, 2019, which is incorporated herein by reference in its entirety. Sparsifying the (e.g., fully-connected) transformer to prune or eliminate a substantial portion of the transformer's synapses or filters (e.g., at least 50%-99%) may generate a sparse neural network operating at increased speed and using reduced memory usage. In various embodiments, the transformer may be sparsified globally (across all layers) or locally (across one or more layers, e.g., selected manually or automatically based on optimized speed-up). Experiments conducted sparsifying a real-world transformer showed sparsifying the transformer speeds up its computation by about ten times.

Some embodiments of the invention may use a compact data representation for sparse transformers that eliminates storing and processing disconnected synapses according to embodiments disclosed in U.S. Patent No. 10,366,322 issued on July 30, 2019. Each of the plurality of weights or filters of the sparse transformer may be stored with an association to a unique index. The unique index may uniquely identify a pair of artificial neurons that have a connection represented by the weight or a pair of channels that have a connection represented by the weights of the convolutional filter. Only non-zero weights or filters may be stored that represent connections between pairs of neurons or channels (and zero weights or filters may not be stored that represent no connections between pairs of neurons or channels).

Accordingly, a real-time transformer may predict the N next tokens, for example, at substantially a same rate as (approximately equal to the speed that) the plurality of N loggers generate each new plurality of N tokens in the plurality of N sequences of log file tokens and/or the associated components operate the behavior being logged. In some embodiments, real-time prediction may allow component behavior logged by the loggers to be detected, adjusted and/or corrected in real-time. For example, the speed of the transformer log file prediction may be approximately equal to the speed of the component operation (e.g., operating a 3D printer head) being logged in the log file. In this example, when the transformer predicts a future component (e.g., 3D printer head) failure, it may send a signal to adjust the component's behavior (e.g., stop the 3D printer). Next tokens may be predicted for as many future times (T+1, T+2, ..., T+p) as desired, for example, to provide sufficient response time to preemptively adjust the components' behavior to prevent the future predicted failures or malfunctions.

Some embodiments of the invention may teach large language models the language of log files for anomaly detection. Since many industrial machines, components and loggers are different, some embodiments may train in two phases: 1. Train large language models on all generic log files (huge corpus) including unlabeled log files. 2. Take this generically trained log file transformer and fine tune its training based on a specific target industrial machine. This multi-pass training makes the transformer initially trained to predict behavior of generic loggers and components and refines its training to predict behavior of specific target loggers and components. Learning log file behavior of generic components in phase 1 may improve the accuracy of learning log file behavior of specific components in phase 2, as there are generally more similarities than dissimilarities between different loggers and/or components.

It may be assumed that most of time, an industrial machine is operating correctly, so unlabeled log files may be presumed to model normal component behavior.

Some embodiments of the invention may detect for real-time log file anomalies indicating abnormal behavior of the components being logged. A transformer may predict a next word or token in a log file. The accuracy or prediction error of each next token may be measured as 1-softmax probability that it is the correct token. A sequence of tokens logged from times t0 to T may be input into transformer to output a prediction of the next token in the log file sequence at time T+1. When a prediction error exceeds a threshold or when the predicted and actual next tokens differ over a period of time, indicated the transformer prediction is in error. For example, if the transformer usually predicts next tokens with 70% accuracy, but then dips to 20% accuracy, a signal may be generated indicating the transformer prediction is in error. An acute reduction in transformer accuracy may reflect a log file anomaly because the transformer is trained based on log files of generally normal machine behavior. When the transformer stops being able to accurately predict the next token in the log file, the system may predict abnormal behavior of the associated logger(s) or component(s). The prediction accuracy threshold, below which anomalies are predicted, may be tuned based on (e.g., slightly lower than, such as by 1-10%) the (e.g., convergent or mean) accuracy achieved during (e.g., the convergent or final stages or epoch of) training.

According to some embodiments of the invention, there is provided a device, system and method for troubleshooting industrial machines. A log file may be compiled aggregating log file tokens received from a plurality of loggers logging states, parameters or behavioral indicators of one or more industrial machines. The log file may be input, fed or streamed into a transformer as it is compiled (e.g., in real time) from the plurality of loggers of the industrial machines. At the transformer, a predicted future log file token may be predicted comprising a timestamp, logger identifier and a logged value, based on the current input log file of a current iteration or time. Accuracy of the predicted future log file token output by the transformer may be compared to a next log file token received from one or more of the plurality of respective loggers of one or more industrial machines. Abnormal behavior may be predicted at one or more of the industrial machines when the accuracy of the iterative comparison degrades outside of a threshold range over one or more iterations.

In some embodiments, one or more logger identifiers may be predicted identifying which of the plurality of loggers generated one or more of the next log file tokens that triggered the detection of abnormal behavior. That logger may be identified as the source of the abnormal behavior.

The transformer may be trained in two (or more) stages based on two respective training datasets, e.g. in the following order: (i) based on unlabeled training dataset comprising log files received from industrial machines different than those analyzed in prediction mode and (ii) based on labeled training dataset comprising the log file received the one or more of the industrial machines analyzed in prediction mode.

Tokens may be detected for deviation or adherence in various resolutions, such as, individually per token, or as collective combinations of multiple tokens, and/or over sequences thereof over time.

Although embodiments of the invention are described in reference to "industrial machines," any machine, device or system of operably connected hardware and/or software components that comprises one or more loggers that generate one or more log files may additionally or alternatively be used. Although embodiments of the invention are described in reference to "log file" tokens, any other tokens may additionally or alternatively be used.

Although embodiments of the invention describe specific integer numbers of N, T, etc., any other number of integers may be used. For example, some or all sequences may have different lengths T1, T2, ....

Terms such as low or high may be application dependent. In some cases, low may refer to proportions less than 50% or less than 10%, while high may refer to proportions greater than 50% or greater than 90%. Approximately equal may refer, for example, to within 10%.

Inputting/outputting data to/from transformer layers may refer to direct inputs/outputs or indirect inputs/outputs separated by one or more intermediate layers (i.e., inputting/outputting data derived therefrom). For example, in Figs. **2-3**, intra sequence multi-head self-attention layer may (indirectly) input intra sequence attention vectors into an inter sequence multi-head self-attention layer, where there is an Add & Norm layers modifying that input therebetween.

In the foregoing description, various aspects of the present invention are described. For purposes of explanation, specific configurations and details are set forth in order to provide a thorough understanding of the present invention. However, it will also be apparent to persons of ordinary skill in the art that the present invention may be practiced without the specific details presented herein. Furthermore, well known features may be omitted or simplified in order not to obscure the present invention.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

The aforementioned flowchart and block diagrams illustrate the architecture, functionality, and operation of possible implementations of systems and methods according to various embodiments of the present invention. In this regard, each block in the flowchart or block diagrams may represent a module, segment, or portion of code, which may comprise one or more executable instructions for implementing the specified logical function(s). In some alternative implementations, the functions noted in the block may occur out of the order noted in the figures or by different modules. Unless explicitly stated, the method embodiments described herein are not constrained to a particular order or sequence. Additionally, some of the described method embodiments or elements thereof can occur or be performed at the same point in time. Each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Embodiments of the invention may include an article such as a non-transitory computer or processor readable medium, or a computer or processor non-transitory storage medium, such as for example a memory (e.g., memory units **416** and/or **426** of Fig. **4**), a disk drive, or a USB flash memory, encoding, including or storing instructions, e.g., computer-executable instructions, which, when executed by a processor or controller (e.g., processors **414** and/or **424** of Fig. **4**), carry out methods disclosed herein.

In the above description, an embodiment is an example or implementation of the inventions. The various appearances of "one embodiment," "an embodiment" or "some embodiments" do not necessarily all refer to the same embodiments. Although various features of the invention may be described in the context of a single embodiment, the features of embodiments may also be provided separately or in any suitable combination. Conversely, although the invention may be described herein in the context of separate embodiments for clarity, the invention may also be implemented in a single embodiment. Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions. It will further be recognized that the aspects of the invention described hereinabove may be combined or otherwise coexist in embodiments of the invention.

The descriptions, examples, methods and materials presented in the claims and the specification are not to be construed as limiting but rather as illustrative only. While certain features of the present invention have been illustrated and described herein, many modifications, substitutions, changes, and equivalents may occur to those of ordinary skill in the art. It is, therefore, to be understood that the appended claims are intended to cover all such modifications and changes as fall with the true spirit of the invention. For example, each component in a transformer may be optional and/or may be repeated multiple times.

While the invention has been described with respect to a limited number of embodiments, these should not be construed as limitations on the scope of the invention, but rather as exemplifications of some of the preferred embodiments. Other possible variations, modifications, and applications are also within the scope of the invention. Different embodiments are disclosed herein. Features of certain embodiments may be combined with features of other embodiments; thus certain embodiments may be combinations of features of multiple embodiments.
The subject matter of the following clauses also forms part of the present disclosure:

### CLAUSES

1. A method of operating a multi-sequence transformer, the method comprising:
   storing a plurality of N sequences of log file tokens generated by a plurality of N respective loggers;
   inputting token patterns derived from the plurality of N sequences of log file tokens into a plurality of N distinct respective intra sequence multi-head self-attention layers to output a plurality of N distinct respective sets of intra sequence attention vectors, each set identifying patterns associated with relationships among tokens within the same sequence of log file tokens generated by the same logger;
   inputting token patterns derived from a combination of the plurality of N respective sequences of log file tokens into a same inter sequence multi-head self-attention layer to output a plurality of N interrelated sets of inter sequence attention vectors identifying patterns associated with relationships among tokens across multiple different ones of the plurality of N sequences of log file tokens generated by multiple different loggers;
   generating, based on machine learning of the intra and inter sequence attention vectors, a plurality of N softmax layers of N distinct probability distributions that each of a plurality of candidate tokens is a next token in each of the plurality of N respective sequences of log file tokens; and
   predicting based on the plurality of N softmax layers, in parallel, a plurality of N next tokens to co-occur in the plurality of N respective sequences of log file tokens.
2. The method of claim 1 comprising:
   receiving a next token recorded by one of the plurality of N loggers; and
   predicting abnormal behavior in a component logged by the one logger when the received next token differs from one of the predicted plurality of N next tokens in the one of the plurality of N sequences generated by the one logger.
3. The method of claim 2 comprising, upon predicting the abnormal behavior, triggering a signal to automatically alter operation of the component until the abnormal behavior is predicted to normalize.
4. The method of claim 1 comprising predicting abnormal behavior of a component logged by one of the plurality of N loggers when a cluster of the candidate tokens have below threshold probabilities of being the next token in the one of the plurality of N sequences generated by the one logger.
5. The method of claim 1 comprising predicting the plurality of N next tokens at substantially a same rate as the plurality of N loggers generate each new plurality of N tokens in the plurality of N sequences of log file tokens to detect behavior of components logged by the plurality of N loggers in real-time.
6. The method of claim 1 comprising training the multi-sequence transformer by:
   inputting the plurality of N sequences of log file tokens until a time T;
   predicting the plurality of N next tokens at a time T+1; and
   updating weights in the multi-sequence transformer based on errors between the predicting plurality of N next tokens at the time T+1 and a plurality of N next tokens generated by the plurality of N respective loggers at the time T+1.
7. The method of claim 6 comprising training the multi-sequence transformer by a degree of error correction in proportion to a measure of the N probability distributions of the plurality of N softmax layers.
8. The method of claim 1, wherein the multi-sequence transformer comprises the N intra sequence multi-head self-attention layers in sequence with the inter sequence multi-head self-attention layer.
9. The method of claim 1, wherein each of the plurality of N sequences of log file tokens has T tokens; and the N intra layers and the inter layer each generate N x T attention vectors.
10. The method of claim 1 comprising pruning or eliminating synapses or filters in the multi-sequence transformer to generate a sparse neural network of a plurality of weights, each weight representing a unique connection between a pair of a plurality of artificial neurons in different layers of a plurality of neuron layers, wherein a minority of pairs of neurons in adjacent neuron layers are connected by weights in the sparse neural network.
11. A system for operating a multi-sequence transformer, the system comprising:
   one or more memories configured to store a plurality of N sequences of log file tokens generated by a plurality of N respective loggers; and
   one or more processors configured to
      input token patterns derived from the plurality of N sequences of log file tokens into a plurality of N distinct respective intra sequence multi-head self-attention layers to output a plurality of N distinct respective sets of intra sequence attention vectors, each set identifying patterns associated with relationships among tokens within the same sequence of log file tokens generated by the same logger,
      input token patterns derived from a combination of the plurality of N respective sequences of log file tokens into a same inter sequence multi-head self-attention layer to output a plurality of N interrelated sets of inter sequence attention vectors identifying patterns associated with relationships among tokens across multiple different ones of the plurality of N sequences generated by multiple different loggers,
      generate, based on machine learning of the intra and inter sequence attention vectors, a plurality of N softmax layers of N distinct probability distributions that each of a plurality of candidate tokens is a next token in each of the plurality of N respective sequences of log file tokens, and
      predict based on the plurality of N softmax layers, in parallel, a plurality of N next tokens to co-occur in the plurality of N respective sequences of log file tokens.
12. The system of claim 11, wherein the one or more processors are configured to:
   receive a next token recorded by one of the plurality of N loggers, and
   predict abnormal behavior in a component logged by the one logger when the received next token differs from one of the predicted plurality of N next tokens in the one of the plurality of N sequences generated by the one logger.
13. The system of claim 12, wherein upon predicting the abnormal behavior, the one or more processors are configured to trigger a signal to automatically alter operation of the component until the abnormal behavior is predicted to normalize.
14. The system of claim 11, wherein the one or more processors are configured to predict abnormal behavior of a component logged by one of the plurality of N loggers when a cluster of the candidate tokens have below threshold probabilities of being the next token in the one of the plurality of N sequences generated by the one logger.
15. The system of claim 11, wherein the one or more processors are configured to predict the plurality of N next tokens at substantially a same rate as the plurality of N loggers generate each new plurality of N tokens in the plurality of N sequences of log file tokens to detect behavior of components logged by the plurality of N loggers in real-time.
16. The system of claim 11, wherein the one or more processors are configured to train the multi-sequence transformer by:
   inputting the plurality of N sequences of log file tokens until a time T,
   predicting the plurality of N next tokens at a time T+1, and
   updating weights in the multi-sequence transformer based on errors between the predicting plurality of N next tokens at the time T+1 and a plurality of N next tokens generated by the plurality of N respective loggers at the time T+1.
17. The system of claim 16, wherein the one or more processors are configured to train the multi-sequence transformer by a degree of error correction in proportion to a measure of the N probability distributions of the plurality of N softmax layers.
18. The system of claim 11, wherein the multi-sequence transformer comprises the N intra sequence multi-head self-attention layers in sequence with the inter sequence multi-head self-attention layer.
19. The system of claim 11, wherein each of the plurality of N sequences of log file tokens has T tokens; and the N intra layers and the inter layer each generate N x T attention vectors.
20. The system of claim 11, wherein the one or more processors are configured to prune or eliminate synapses or filters in the multi-sequence transformer to generate a sparse neural network of a plurality of weights, each weight representing a unique connection between a pair of a plurality of artificial neurons in different layers of a plurality of neuron layers, wherein a minority of pairs of neurons in adjacent neuron layers are connected by weights in the sparse neural network.

## Claims

1. A method of operating a multi-sequence transformer, the method comprising:
storing a plurality of N sequences of log file tokens generated by a plurality of N respective loggers;
inputting token patterns derived from the plurality of N sequences of log file tokens into a plurality of N distinct respective intra sequence multi-head self-attention layers to output a plurality of N distinct respective sets of intra sequence attention vectors, each set identifying patterns associated with relationships among tokens within the same sequence of log file tokens generated by the same logger;
inputting token patterns derived from a combination of the plurality of N respective sequences of log file tokens into a same inter sequence multi-head self-attention layer to output a plurality of N interrelated sets of inter sequence attention vectors identifying patterns associated with relationships among tokens across multiple different ones of the plurality of N sequences of log file tokens generated by multiple different loggers;
generating, based on machine learning of the intra and inter sequence attention vectors, a plurality of N softmax layers of N distinct probability distributions that each of a plurality of candidate tokens is a next token in each of the plurality of N respective sequences of log file tokens; and
predicting based on the plurality of N softmax layers, in parallel, a plurality of N next tokens to co-occur in the plurality of N respective sequences of log file tokens.

2. The method of claim 1 comprising:
receiving a next token recorded by one of the plurality of N loggers; and
predicting abnormal behavior in a component logged by the one logger when the received next token differs from one of the predicted plurality of N next tokens in the one of the plurality of N sequences generated by the one logger; and optionally,
upon predicting the abnormal behavior, triggering a signal to automatically alter operation of the component until the abnormal behavior is predicted to normalize.

3. The method of claim 1 comprising predicting:
i) abnormal behavior of a component logged by one of the plurality of N loggers when a cluster of the candidate tokens have below threshold probabilities of being the next token in the one of the plurality of N sequences generated by the one logger; or
ii) the plurality of N next tokens at substantially a same rate as the plurality of N loggers generate each new plurality of N tokens in the plurality of N sequences of log file tokens to detect behavior of components logged by the plurality of N loggers in real-time.

4. The method of claim 1 comprising training the multi-sequence transformer by:
inputting the plurality of N sequences of log file tokens until a time T;
predicting the plurality of N next tokens at a time T+1; and
updating weights in the multi-sequence transformer based on errors between the predicting plurality of N next tokens at the time T+1 and a plurality of N next tokens generated by the plurality of N respective loggers at the time T+1; and optionally,
training the multi-sequence transformer by a degree of error correction in proportion to a measure of the N probability distributions of the plurality of N softmax layers.

5. The method of claim 1, wherein the multi-sequence transformer comprises the N intra sequence multi-head self-attention layers in sequence with the inter sequence multi-head self-attention layer.

6. The method of claim 1, wherein each of the plurality of N sequences of log file tokens has T tokens; and the N intra layers and the inter layer each generate N x T attention vectors.

7. The method of claim 1 comprising pruning or eliminating synapses or filters in the multi-sequence transformer to generate a sparse neural network of a plurality of weights, each weight representing a unique connection between a pair of a plurality of artificial neurons in different layers of a plurality of neuron layers, wherein a minority of pairs of neurons in adjacent neuron layers are connected by weights in the sparse neural network.

8. A system for operating a multi-sequence transformer, the system comprising:
one or more memories configured to store a plurality of N sequences of log file tokens generated by a plurality of N respective loggers; and
one or more processors configured to
input token patterns derived from the plurality of N sequences of log file tokens into a plurality of N distinct respective intra sequence multi-head self-attention layers to output a plurality of N distinct respective sets of intra sequence attention vectors, each set identifying patterns associated with relationships among tokens within the same sequence of log file tokens generated by the same logger,
input token patterns derived from a combination of the plurality of N respective sequences of log file tokens into a same inter sequence multi-head self-attention layer to output a plurality of N interrelated sets of inter sequence attention vectors identifying patterns associated with relationships among tokens across multiple different ones of the plurality of N sequences generated by multiple different loggers,
generate, based on machine learning of the intra and inter sequence attention vectors, a plurality of N softmax layers of N distinct probability distributions that each of a plurality of candidate tokens is a next token in each of the plurality of N respective sequences of log file tokens, and
predict based on the plurality of N softmax layers, in parallel, a plurality of N next tokens to co-occur in the plurality of N respective sequences of log file tokens.

9. The system of claim 8, wherein the one or more processors are configured to:
receive a next token recorded by one of the plurality of N loggers, and
predict abnormal behavior in a component logged by the one logger when the received next token differs from one of the predicted plurality of N next tokens in the one of the plurality of N sequences generated by the one logger; and optionally,
wherein upon predicting the abnormal behavior, the one or more processors are configured to trigger a signal to automatically alter operation of the component until the abnormal behavior is predicted to normalize.

10. The system of claim 8, wherein the one or more processors are configured to predict abnormal behavior of a component logged by one of the plurality of N loggers when a cluster of the candidate tokens have below threshold probabilities of being the next token in the one of the plurality of N sequences generated by the one logger.

11. The system of claim 8, wherein the one or more processors are configured to predict the plurality of N next tokens at substantially a same rate as the plurality of N loggers generate each new plurality of N tokens in the plurality of N sequences of log file tokens to detect behavior of components logged by the plurality of N loggers in real-time.

12. The system of claim 8, wherein the one or more processors are configured to train the multi-sequence transformer by:
inputting the plurality of N sequences of log file tokens until a time T,
predicting the plurality of N next tokens at a time T+1, and
updating weights in the multi-sequence transformer based on errors between the predicting plurality of N next tokens at the time T+1 and a plurality of N next tokens generated by the plurality of N respective loggers at the time T+1; and optionally,
wherein the one or more processors are configured to train the multi-sequence transformer by a degree of error correction in proportion to a measure of the N probability distributions of the plurality of N softmax layers.

13. The system of claim 8, wherein the multi-sequence transformer comprises the N intra sequence multi-head self-attention layers in sequence with the inter sequence multi-head self-attention layer.

14. The system of claim 8, wherein each of the plurality of N sequences of log file tokens has T tokens; and the N intra layers and the inter layer each generate N x T attention vectors.

15. The system of claim 8, wherein the one or more processors are configured to prune or eliminate synapses or filters in the multi-sequence transformer to generate a sparse neural network of a plurality of weights, each weight representing a unique connection between a pair of a plurality of artificial neurons in different layers of a plurality of neuron layers, wherein a minority of pairs of neurons in adjacent neuron layers are connected by weights in the sparse neural network.
